Europäisches Patentamt

European Patent Office

Office européen des brevets

(19)

(11) Veröffentlichungsnummer: **0 481 298 A1**

# (12) EUROPÄISCHE PATENTANMELDUNG

(21) Anmeldenummer: **91116914.2**

(22) Anmeldetag: **04.10.91**

(51) Int. Cl.5: **C01B 17/66**

(30) Priorität: **19.10.90 DE 4033194**

(43) Veröffentlichungstag der Anmeldung:
**22.04.92 Patentblatt 92/17**

(84) Benannte Vertragsstaaten:
**BE CH DE ES FR GB IT LI NL SE**

(71) Anmelder: **BASF Aktiengesellschaft**
**Carl-Bosch-Strasse 38**
**W-6700 Ludwigshafen(DE)**

(72) Erfinder: **Leutner, Bernd, Dr.**
**Taunusstrasse 17**
**W-6710 Frankenthal(DE)**
Erfinder: **Ebenhoech, Johan, Dr.**
**Klagenfurter Strasse 1**
**W-6700 Ludwigshafen(DE)**
Erfinder: **Meyer, Udo, Dr.**
**Werderstrasse 20**
**W-6800 Mannheim 1(DE)**
Erfinder: **Lukas, Siegmar, Dr.**
**Sulzbacher Strasse 5**
**W-6700 Ludwigshafen(DE)**
Erfinder: **Schreiner, Siegfried, Dr.**
**Mohnstrasse 39**
**W-6700 Ludwigshafen(DE)**
Erfinder: **Treiber, Gert, Dr.**
**Richard-Wagner-Strasse 63**
**W-6520 Worms 1(DE)**
Erfinder: **Wolf, Manfred R., Dr.**
**Rheingoldstrasse 161**
**W-6800 Mannheim 24(DE)**

(54) **Wasser enthaltende Natriumdithionitzubereitungen.**

(57) Stabilisierte, Wasser enthaltende alkalisch eingestellte Dithionitzubereitungen, mit einem Natriumdithionitgehalt von 60 bis 70 Gew.-% und einem Wassergehalt von 15 bis 30 Gew.-%, deren Gesamtgehalt an diesen beiden Komponenten in der Zubereitung 90 Gew.-% nicht übersteigt, enthalten ein in Wasser gelöstes, gegenüber Natriumdithionit inertes Natrium- und/oder Kaliumsalz mit einer Wasserlöslichkeit von mindestens 500 g/l bei 20°C. Der Gehalt an diesen Salzen soll mindestens 200 g/l Wasser betragen. Die Zubereitungen enthalten als Stabilisatoren Zink, Zinkverbindungen, Butylenoxid und/oder Ascorbinsäure.

EP 0 481 298 A1

In der EP-PS 0 153 671 werden Wasser enthaltende, alkalisch eingestellte Natriumdithionitzubereitungen beschrieben, die die Konsistenz einer pumpfähigen Paste aufweisen. Die Zubereitungen haben einen pH-Wert von > 10, einen Natriumdithionitgehalt von 60 bis 70 Gew.-% und einen Wassergehalt von 15 bis 30 Gew.-%. Der Gesamtgehalt dieser beiden Komponenten soll maximal 90 Gew.-% nicht überschreiten. Darüber hinaus enthalten die Zubereitungen ein in Wasser gelöstes, gegenüber Natriumdithionit inertes Natrium- und/oder Kaliumsalz, das eine Löslichkeit in Wasser von mindestens 500 g/l bei 20°C aufweist, mit der Maßgabe, daß die Mindestkonzentration des in Wasser gelösten Salzes 200 g/l beträgt. Zusätzlich können diese Zubereitungen auch an sich bekannte Stabilisatoren enthalten, wobei beispielsweise das Natriumsalz der Ethylendiamintetraessigsäure genannt wird. Diese Zubereitungen sind stabil und weisen nach 3 Wochen noch einen Natriumdithionitgehalt von 92 bis 98 % des Ausgangswertes auf.

Der vorliegenden Erfindung lag die Aufgabe zugrunde, die Stabilität dieser Wasser enthaltenden Natriumdithionitzubereitungen weiter zu erhöhen.

Es wurde nun gefunden, daß diese Aufgabe dadurch gelöst werden kann, daß die Zubereitungen als Stabilisatoren Zink, Zinkverbindungen, Butylenoxid und/oder Ascorbinsäure enthalten.

Als Zinkverbindungen kommen z.B. Zinkoxid oder solche Zinksalze in Betracht, deren Anion mit Natriumdithionit nicht reagiert. Als geeignete Zinksalze seien beispielsweise genannt Zinksulfat oder Zinkricinoleat. Als Butylenoxid kommt insbesondere 1,2-Butylenoxid in Betracht.

Die Stabilisatoren werden, bezogen auf 1 kg Zubereitung, in Mengen von 0,1 g bis 40 g, vorzugsweise von 0,2 g bis 20 g eingesetzt.

Neben Wasser, Dithionit und den leicht löslichen Kalium- und/oder Natriumsalzen, z.B. Natriumformiat, Natriumacetat, das Natriumsalz der Oximethansulfinsäure, Kaliumcarbonat und Kaliumsulfit, können die erfindungsgemäßen Zubereitungen auch Dispergatoren enthalten. Ein Teil des in den Zubereitungen enthaltenen Wassers kann auch durch eine mit Wasser mischbare organische Flüssigkeit ersetzt werden, insbesondere durch Alkohole wie Methanol, Ethanol, Ethylenglykol und Glycerin. Der Anteil an diesen organischen Flüssigkeiten sollte allerdings 80 %, bezogen auf den Wassergehalt, nicht übersteigen.

Beispiel 1 (Vergleichsbeispiel)

Eine Zubereitung der Zusammensetzung

| | |
|---|---:|
| Natriumdithionit (88 %ig) | 685,0 g |
| Wasser | 168,5 g |
| Natriumformiat | 125,0 g |
| NaOH | 10,5 g |
| Dispergator | |
| Na-Salz eines Naphthalinsulfonsäurekondensationsprodukts | 8,5 g |
| Natriumsalz der Ethylendiamintetraessigsäure | 2,5 g |
| | 1000,0 g |

deren pH-Wert 12,5 beträgt, wird unter Luftausschluß bei 25°C gelagert.

In der Tabelle ist die Zeit in Tagen angegeben in der der ursprüngliche Dithionitgehalt der Zubereitung um 3 % abgenommen hat.

Beispiele 2 bis 8

In folgenden Beispielen werden Zubereitungen getestet, die sich von den Zubereitungen des Beispiels 1 nur dadurch unterscheiden, daß anstelle des Natriumsalzes der Ethylendiamintetraessigsäure die in der folgenden Tabelle aufgeführten Stabilisatoren und deren Menge verwendet werden.

| Beispiel | Zusatz/Menge [g] | Chem. Stabilität (Tage) |
|---|---|---|
| 1 | - | 95 |
| 2 | ZnO/0,6 | 118 |
| 3 | ZnO/1,2 | 129 |
| 4 | ZnO/3,0 | 153 |
| 5 | ZnO/0,8 | 118 |
| 6 | $ZnSO_4$; 1,2-Butylenoxid/5; 2 | 147 |
| 7 | Zn-Pulver/0,7 | 123 |
| 8 | Ascorbinsäure/15 | 121 |

Aus der Tabelle ist zu ersehen, daß durch Verwendung der erfindungsgemäßen Stabilisatoren eine deutliche Erhöhung der Standzeit der Natriumdithionitzubereitungen erzielt werden kann.

**Patentansprüche**

1. Stabilisierte, Wasser enthaltende alkalisch eingestellte Natriumdithionitzubereitungen, die die Konsistenz einer pumpfähigen Paste aufweisen, die einen pH-Wert von > 10, einen Natriumdithionitgehalt von 60 bis 70 Gew.-% und einem Wassergehalt von 15 bis 30 Gew.-% aufweisen, wobei der Gesamtgehalt an diesen beiden Komponenten in der Zubereitung maximal 90 Gew.-% nicht überschreitet, und die ferner Stabilisatoren und ein in Wasser gelöstes, gegenüber Natriumdithionit inertes Natrium- und/oder Kaliumsalz enthalten, das eine Löslichkeit in Wasser von mindestens 500 g/l bei 20°C aufweist, mit der Maßgabe, daß die Mindestkonzentration des in Wasser gelösten Salzes 200 g/l beträgt, dadurch gekennzeichnet, daß die Zubereitungen als Stabilisatoren Zink, Zinkverbindungen, Butylenoxid und/oder Ascorbinsäure enthalten.

**Patentanspruch für folgenden Vertragsstaat : ES**

1. Verfahren zur Herstellung von stabilisierten, Wasser enthaltenden alkalisch eingestellten Natriumdithionitzubereitungen, die die Konsistenz einer pumpfähigen Paste aufweisen, die einen pH-Wert von > 10, einen Natriumdithionitgehalt von 60 bis 70 Gew.-% und einem Wassergehalt von 15 bis 30 Gew.-% aufweisen, wobei der Gesamtgehalt an diesen beiden Komponenten in der Zubereitung maximal 90 Gew.-% nicht überschreitet, und die ferner Stabilisatoren und ein in Wasser gelöstes, gegenüber Natriumdithionit inertes Natrium- und/oder Kaliumsalz enthalten, das eine Löslichkeit in Wasser von mindestens 500 g/l bei 20°C aufweist, mit der Maßgabe, daß die Mindestkonzentration des in Wasser gelösten Salzes 200 g/l beträgt, dadurch gekennzeichnet, daß man den Zubereitungen als Stabilisatoren Zink, Zinkverbindungen, Butylenoxid und/oder Ascorbinsäure zugibt.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | US-A-3 672 829   (KISE)<br>* das ganze Dokument * *<br>– – – | 1 | C 01 B 17/66 |
| Y | CHEMICAL ABSTRACTS, vol. 76, no. 20, Mai 1972, Columbus, Ohio, US; abstract no. 115635 X, Y. FUJIHARA ET AL.: 'Stabilization of sodium dithionite.' Seite 175 ;<br>* das ganze Dokument *<br>& JP-A-46016659 (MITSUI TOATSU CHEMICALS) *<br>– – – | 1 | |
| Y | DE-A-1 546 239   (BASF)<br>* das ganze Dokument * *<br>– – – | 1 | |
| Y | US-A-4 871 423   (GRIMSLEY)<br>* Spalte 4, Zeile 14 - Zeile 19; Ansprüche * *<br>– – – | 1 | |
| D,Y | EP-A-0 153 671   (BASF)<br>* das ganze Dokument * *<br>– – – | 1 | |
| A | DE-B-1 245 924   (KONINKLIJKE NEDERLANDSCHE ZOUTINDUSTRIE)<br>* Spalte 3, Zeile 11 - Zeile 18; Beispiel 2 * *<br>– – – | 1 | **RECHERCHIERTE SACHGEBIETE (Int. Cl.5)** |
| A | GB-A-695 375   (THE YORKSHIRE DYEWARE & CHEMICAL COMPANY)<br>* Anspruch 1 * *<br>– – – – – | 1 | C 01 B<br>D 21 C |

Der vorliegende Recherchenbericht wurde für alle Patentansprüche erstellt

| Recherchenort | Abschlußdatum der Recherche | Prüfer |
|---|---|---|
| Den Haag | 30 Januar 92 | ZALM W.E. |